# EUROPÄISCHE PATENTSCHRIFT

(11) **EP 3 444 135 B1**
(45) Veröffentlichungstag und Bekanntmachung des Hinweises auf die Patenterteilung: **13.05.2020**
(21) Anmeldenummer: 18187946.1
(22) Anmeldetag: 08.08.2018
(51) Int. Cl.: B60H 1/00, H01M 8/04029, H01M 10/625, B60H 1/32, B60L 3/00, B60L 58/33, B60L 58/34, H01M 10/613, H01M 10/6568, H01M 10/66

(54) **KREISLAUFSYSTEM FÜR EIN BRENNSTOFFZELLEN-FAHRZEUG**
CIRCULATORY SYSTEM FOR FUEL CELL VEHICLE
SYSTÈME CIRCULATOIRE POUR UN VÉHICULE À PILE À COMBUSTIBLE

(30) Priorität: 13.08.2017 DE 102017118424
(43) Veröffentlichungstag der Anmeldung: 20.02.2019
(73) Patentinhaber: Konvekta Aktiengesellschaft, 34613 Schwalmstadt-Ziegenhain (DE)
(72) Erfinder: Sonnekalb, Michael, 34613 Schwalmstadt (DE); Fink, Sebastian, 34628 Willingshausen (DE)
(74) Vertreter: Lindinger, Bernhard

(56) Entgegenhaltungen:
- DE-A1-102007 016 298
- US-A1- 2010 012 295
- US-A1- 2016 107 505

## Beschreibung

### Gebiet der Technik:

Die Erfindung betrifft ein Kreislaufsystem für ein Brennstoffzellen-Fahrzeug, wobei das Kreislaufsystem zumindest einen ein erstes Fluid führenden ersten Kreislauf, bei dem in vorgesehener Strömungsrichtung des ersten Fluides wenigstens ein Verdichter, wenigstens ein Wärmetauscher als Kondensator oder Gaskühler, wenigstens ein Expansionsorgan und wenigstens ein weiterer Wärmetauscher als Verdampfer angeordnet sind, einen in Wärmetauschverbindung zum ersten Kreislauf betreibbaren ein zweites Fluid führenden zweiten Kreislauf insbesondere zum Kühlen einer Traktionsbatterie und einen in Wärmetauschverbindung zum zweiten Kreislauf betreibbaren ein drittes Fluid führenden dritten Kreislauf insbesondere zum Kühlen einer Brennstoffzellenanordnung umfasst. Eine Brennstoffzellenanordnung ist eine Anordnung von einer Brennstoffzelle oder mehreren Brennstoffzellen, wie beispielsweise als Brennstoffzellenstapel. In einer Brennstoffzellenanordnung wird aus chemischer Energie mittels eines elektrochemischen Prozesses elektrische Energie erzeugt. Dabei reagiert ein Brennstoff, wie beispielsweise Wasserstoff (H2), mit einem Oxidanten, wie der Umgebungsluft, unter Bildung von elektrischer Energie zu beispielsweise Wasser (H2O). So wird in einer Niedertemperatur-PEM-Brennstoffzelle Wasserstoff (H2) als Brennstoff eingesetzt.

Die Erfindung betrifft ferner ein Brennstoffzellen-Fahrzeug mit einem derartigen Kreislaufsystem sowie ein Verfahren zum Betrieb eines derartigen Kreislaufsystems. Ein Brennstoffzellen-Fahrzeug ist ein Fahrzeug mit einer Brennstoffzellenanordnung, wobei zumindest ein Teil der durch die Brennstoffzellenanordnung erzeugten elektrischen Energie für den Betrieb wenigstens eines Elektroantriebsmotors des Fahrzeugs verwandt wird. Zu den Brennstoffzellen-Fahrzeugen gehören insbesondere batterieelektrische Kraftfahrzeuge mit einem Range-Extender-Modul, das zur Erzeugung von elektrischer Energie eine Brennstoffzellenanordnung aufweist. Die damit erzeugte elektrische Energie wird der diese speichernde Traktionsbatterie des Fahrzeugs zugeführt. So kann die Traktionsbatterie während der Fahrt nachgeladen werden, was eine höhere Reichweite des Fahrzeugs als bei reinem Batteriebetrieb zur Folge hat. Es sind Plug-in-Ausführungen von Brennstoffzellen-Fahrzeugen bekannt, bei denen die Traktionsbatterie zusätzlich an einer elektrischen Ladestation angeschlossen nachgeladen werden kann.

Bei Betrieb einer Traktionsbatterie sowie bei Betrieb einer Brennstoffzellenanordnung fällt Wärme an, so dass eine Möglichkeit der Kühlung dieser notwendig ist. Die bevorzugte Betriebstemperatur für eine Traktionsbatterie liegt im Bereich zwischen 20°C und 30°C. Bei einer Brennstoffzellenanordnung liegt die Betriebstemperatur etwas höher bei beispielsweise ungefähr 80°C.

### Stand der Technik:

Bekannt ist ein Kreislaufsystem mit einem Kühlkreislauf zum Kühlen der Brennstoffzellenanordnung und einem weiten Kühlkreislauf der Traktionsbatterie, wobei die dabei abgeführte Wärme weiter im Fahrzeug nutzbar ist. So offenbart DE 10 2011 076 737 A1 in Figur 1 ein Kreislaufsystem für ein Brennstoffzellen-Fahrzeug mit drei Kreisläufen. Der erste Kreislauf (dort als "Kältemittelkreislauf 50" bezeichnet) ist ein Kältemittelkreislauf mit einem Verdichter, Kondensator, Expansionsorgan, Verdampfer und Wärmetauscher mit Wärmetauschverbindung zum zweiten Kreislauf (dort als "erstes Fluidleitsystem 12" bezeichnet). Der zweite Kreislauf, der unter anderem zum Kühlen der Traktionsbatterie dient, verfügt wiederum mittels eines Wärmetauschers über eine Wärmetauschverbindung mit einem dritten Kreislauf (dort als "zweites Fluidleitsystem 70" bezeichnet), wobei der dritte Kreislauf zum Kühlen der Brennstoffzellenanordnung dient. Jedoch erfolgt im in DE 10 2011 076 737 A1 offenbarten Kreislaufsystem die Heizung des Fahrzeuginnenraums über den zweiten Kreislauf. Nachteilig ist dadurch eine Abstimmung des Heizbetriebes mit der ebenfalls im zweiten Kreislauf angeordneten Kühlung der Traktionsbatterie notwendig. Ferner wird die beim Wärmeaustauscher vom zweiten Kreislauf 12 auf den ersten Kreislauf 50 übertragene Wärme nachteilig zum Heizen des Fahrzeuginnenraums nicht verwendet. Der erste Kreislauf 50 ist in DE 10 2011 076 737 A1 keine Wärmepumpe und erst recht nicht als solche gedacht. Außerdem ist ein material-, kosten- und gewichtsaufwendiges Leitungssystem für den zweiten Kreislauf (dort als "erstes Fluidleitsystem 12" bezeichnet) in DE 10 2011 076 737 A1 erforderlich, denn der Ort der Wärmetauscher zum Heizen des Fahrzeuginnenraums und der Ort der Traktionsbatterie können im großen Abstand zueinander im Fahrzeug positioniert sein.

In US2010/012295A1 sind ein Kreislaufsystem und ein Verfahren für ein Brennstoffzellen-Fahrzeug mit drei Kreisläufen offenbart. Der erste Kreislauf ist ein Kältemittelkreislauf mit einem Verdichter, Kondensator, zwei Expansionsorganen, einem Verdampfer und einem zum Verdampfer parallel geschalteten Chiller mit Wärmetauschverbindung zum zweiten Kreislauf. Der zweite Kreislauf, der unter anderem zum Kühlen der Traktionsbatterie dient, verfügt wiederum mittels eines Wärmetauschers über eine Wärmetauschverbindung mit einem dritten Kreislauf, wobei der dritte Kreislauf zum Kühlen der Brennstoffzellenanordnung dient. Im in US2010/012295A1 offenbarten Kreislaufsystem erfolgt die Heizung des Fahrzeuginnenraums über den dritten Kreislauf, wobei die Abwärme der Traktionsbatterie ungenutzt bleibt. Ferner wird die beim Wärmeaustauscher vom zweiten Kreislauf auf den ersten Kreislauf übertragene Wärme zum Heizen des Fahrzeuginnenraums nicht verwendet. Der erste Kreislauf ist in US2010/012295A1 keine Wärmepumpe.

Der Erfindung liegt daher die erste Aufgabe zugrunde, ein verbessertes Kreislaufsystem für ein Brennstoffzellen-Fahrzeug umfassend zumindest einen ein erstes Fluid führenden ersten Kreislauf, bei dem in vorgesehener Strömungsrichtung des ersten Fluides wenigstens ein Verdichter, wenigstens ein Wärmetauscher als Kondensator oder Gaskühler, wenigstens ein Expansionsorgan und wenigstens ein weiterer Wärmetauscher als Verdampfer angeordnet sind, einen in Wärmetauschverbindung zum ersten Kreislauf betreibbaren ein zweites Fluid führenden zweiten Kreislauf insbesondere zum Kühlen einer Traktionsbatterie und einen in Wärmetauschverbindung zum zweiten Kreislauf betreibbaren ein drittes Fluid führenden dritten Kreislauf insbesondere zum Kühlen einer Brennstoffzellenanordnung bereitzustellen. Eine zweite entsprechende Aufgabe bezieht sich auf die Bereitstellung eines verbesserten Brennstoffzellen-Fahrzeugs mit einem derartigen Kreislaufsystem.

### Zusammenfassung der Erfindung:

Die erste Aufgabe wird durch ein Kreislaufsystem gemäß den Merkmalen des Anspruch 1 gelöst. Dadurch, dass das Kreislaufsystem für ein Brennstoffzellen-Fahrzeug zumindest einen ein erstes Fluid führenden im Wärmepumpenbetrieb betreibbaren ersten Kreislauf, bei dem in vorgesehener Strömungsrichtung des ersten Fluides wenigstens ein Verdichter, wenigstens ein Wärmetauscher als Kondensator oder Gaskühler, wenigstens ein Expansionsorgan und wenigstens ein weiterer Wärmetauscher als Verdampfer angeordnet sind, wobei nach dem wenigstens einen Expansionsorgan und vor dem wenigstens einen Verdichter zumindest ein erster Wärmetauscher, dem das erste Fluid zuführbar ist, angeordnet ist, einen ein zweites Fluid führenden zweiten Kreislauf normalerweise zum Kühlen zumindest einer Traktionsbatterie, wobei in dem zweiten Kreislauf wenigsten eine Fördereinrichtung für das zweite Fluid, der erste Wärmetauscher, dem für einen Wärmeaustausch mit dem ersten Fluid das zweite Fluid zuführbar ist, und eine zum Wärmeaustausch des zweiten Fluides mit einer Traktionsbatterie ausgebildete Wärmetauschverbindung angeordnet sind und einen ein drittes Fluid führenden dritten Kreislauf zum Kühlen einer Brennstoffzellenanordnung, wobei in dem dritten Kreislauf wenigstens eine Fördereinrichtung für das dritte Fluid, ein Wärmetauscher, dem für einen Wärmeaustausch mit dem zweiten Fluid das dritte Fluid zuführbar ist, und eine zum Wärmeaustausch einer Brennstoffzellenanordnung mit dem dritten Fluid ausgebildete Wärmetauschverbindung angeordnet sind, umfasst, wobei das Kreislaufsystem ferner einen ein viertes Fluid führenden vierten Kreislauf umfasst, und im vierten Kreislauf wenigstens eine Fördereinrichtung für das vierte Fluid, wenigstens ein das vierte Fluid zuführbarer Wärmetauscher und/oder Konvektor zum Heizen zumindest eines Innenraumbereichs eines Brennstoffzellen-Fahrzeugs und ein Wärmetauscher, dem für einen Wärmeaustausch mit dem ersten Fluid das vierte Fluid zuführbar ist, angeordnet sind, wobei dieser Wärmetauscher, dem auch das erste Fluid zuführbar ist, im ersten Kreislauf nach dem wenigstens einen Verdichter und vor dem wenigstens einen Expansionsorgan angeordnet ist, wird die erste Aufgabe gelöst. Das erfindungsgemäße Kreislaufsystem hat den Vorteil, dass der erste Kreislauf im Wärmepumpenbetrieb, die von der Brennstoffzellenanordnung und der Traktionsbatterie abgegebene Wärme besonders effektiv bei der Erwärmung des vierten Fluides im vierten Kreislauf nutzt. Der Innenraum eines Brennstoffzellen-Fahrzeugs kann so effektiv, günstig und einfach damit besser geheizt werden. Vorteilhaft ist der vierte Kreislauf vom Ort her unabhängig zum zweiten und dritten Kreislauf. Damit werden Material, Kosten und Gewicht an Fluidleitungen und Ventilen für den zweiten Kreislauf, der nicht direkt für die Beheizung des Fahrzeuginnenraums genutzt wird, eingespart. Vorteilhaft wird die Kühlleistung des ersten Kreislaufs und damit auch des zweiten und dritten Kreislaufs bei Abgabe von Wärme aus dem ersten Fluid an den vierten Kreislauf effektiv verbessert. Es ist für die Kühlung von Brennstoffzellenanordnung und Traktionsbatterie jeweils ein eigens dafür angepasstes zweites und drittes Fluid einsetzbar.

In den Unteransprüchen sind vorteilhafte Ausgestaltungen, Weiterbildungen und Verbesserungen des jeweiligen Gegenstandes der Erfindung angegeben.

Gemäß einer vorteilhaften Ausgestaltung des vorliegenden erfindungsgemäßen Kreislaufsystems ist der erste Kreislauf derart ausgebildet, dass darin ein überkritisch betreibbares Fluid als erstes Fluid überkritisch betreibbar ist. Bei einem solchen mit hohem Innendruck betriebenen Kreislauf befindet sich das Fluid auf der Hochdruckseite im überkritischen Zustand, so dass der das Fluid kühlende Wärmetauscher mangels Kondensation einen Gaskühler darstellt. Zwar sind überkritisch arbeitende Anordnungen zum Klimatisieren eines Fahrzeugs beispielsweise aus EP 0424 474 B1 und DE 44 32 272 C2 bekannt, aber nicht für Kreislaufsysteme gemäß den Merkmalen des Anspruchs 1. Die für einen überkritisch betriebenen Kreislauf einsetzbaren Fluide sind deutlich weniger umweltschädlich als die für unterkritischen Betrieb eines Kältemittel- beziehungsweise Wärmepumpenkreislaufs gebräuchlichen Kältemittel wie FKWs so insbesondere das übliche R134a. Auch sind bei einem als Wärmepumpe überkritisch betriebenen Kreislauf Fluide einsetzbar, bei denen die Wärmepumpe auch noch bei deutlich tieferen Außentemperaturen bis -20°C einsatzfähig ist. Besonders vorteilhaft ist das im ersten Kreislauf überkritisch betreibbare erste Fluid CO2 (Kohlendioxid), das unter der Kältemittelbezeichnung R744 auf dem Markt ist. CO2 ist im Vergleich zu Kältemitteln, die unterkritisch betrieben werden, nur sehr wenig umweltschädlich, kann bei tiefen Außentemperaturen bis -20°C im Wärmepumpenbetrieb verwendet und einfach sowie günstig beschafft werden.

Vorzugsweise sind das zweite und vierte Fluid Wasser oder ein Wasser-Glykol-Gemisch und das dritte Fluid ist deionisiertes Wasser. Wasser oder Wasser-Glykol-Gemische sind kostengünstige und effektive Kühl- beziehungsweise Heizflüssigkeiten mit hoher Wärmekapazität. Deionisiertes Wasser ist mit seiner geringen elektrischen Leitfähigkeit besonders gut zum Kühlen einer Brennstoffzellenanordnung geeignet. Eine andere Kühlflüssigkeit mit zu hoher Leitfähigkeit könnte der Brennstoffzellenanordnung schaden sowie deren Leistungsfähigkeit beeinträchtigen.

Nach einer vorteilhaften Weiterbildung der vorliegenden Erfindung ist im ersten Kreislauf in vorgesehener Strömungsrichtung des ersten Fluides nach dem wenigstens einen Expansionsorgan und vor dem wenigstens einen Verdichter ein als Fluid-Luft-Wärmetauscher ausgebildeter und als Verdampfer betreibbarer weiterer Wärmetauscher angeordnet. Dadurch lässt sich über den ersten Kreislauf die Luft für zumindest einen Bereich des Innenraums des Fahrzeugs allein oder zusätzlich zu anderen Kühleinrichtungen kühlen. Dieses erhöht die Flexibilität der Klimatisierung des Fahrzeuginnenraums. Gleichzeitig kann damit auch die vom ersten Kreislauf auf den zweiten und so auch auf den dritten Kreislauf zu leistende Kühlung besser reguliert werden.

Vorzugsweise ist dem zweiten Kreislauf und/oder dem vierten Kreislauf zumindest eine das zweite Fluid und/oder vierte Fluid zusätzlich heizbare Heizeinrichtung zugeschaltet oder zuschaltbar. Sofern im vierten Kreislauf die Heizleistung für die Heizung des Fahrzeuginnenraums nicht ausreicht, besteht so die Möglichkeit, das vierte Fluid zusätzlich zu heizen und so die Heizleistung für die Heizung des Fahrzeuginnenraums zu erhöhen. Im zweiten Kreislauf besteht mit einer das zweite Fluid zusätzlich heizbaren Heizeinrichtung die Möglichkeit, bei zu tiefen Temperaturen für die Traktionsbatterie, wie beispielsweise bei -20°C Außentemperatur, das zweite Fluid besser zu heizen, um mit dem so erhitzten zweiten Fluid die richtige Betriebstemperatur für die Traktionsbatterie zu erhalten. Dieses hat insbesondere Vorteile in der Startphase eines Brennstoffzellen-Fahrzeugs bei niedrigen Außentemperaturen.

Gemäß einer vorteilhaften Weiterbildung des erfindungsgemäßen Kreislaufsystems ist im zweiten Kreislauf in vorgesehener Strömungsrichtung des zweiten Fluides nach dem ersten Wärmetauscher und vor der oder in Bypass-Anordnung zu der zum Wärmeaustausch einer Traktionsbatterie mit dem zweiten Fluid ausgebildeten Wärmetauschverbindung wenigstens ein weiterer Wärmetauscher zum Kühlen der Luft zumindest eines Bereichs eines Innenraums eines Brennstoffzellen-Fahrzeugs angeordnet, und dieser wenigstens eine weitere Wärmetauscher ist mit einer Schalteinrichtung zu dem zweiten Kreislauf zu- und abschaltbar. Damit ist die Möglichkeit gegeben, dass das durch das erste Fluid im ersten Wärmetauscher gekühlte zweite Fluid zumindest einen Bereich des Fahrzeuginnenraums kühlt, wie beispielsweise die Luft im Bereich des Fahrerplatzes. Dadurch dass das im ersten Wärmetauscher gekühlte zweite Fluid dabei nicht vorher die Traktionsbatterie kühlt, ist die so erfolgende Kühlleistung für zumindest einen Bereich des Fahrzeuginnenraums höher. Ferner ist es bei Bypass-Anordnung des weiteren Wärmetauschers zur Traktionsbatterie sogar möglich, dass das zweite Fluid je nach Schaltung der Schalteinrichtung, die beispielsweise ein Dreiwegeventil umfasst, gar nicht durch die Wärmetauschverbindung mit einer Traktionsbatterie strömt, sondern stattdessen durch den Bypass mit dem weiteren Wärmetauscher. Folglich ist die darüber erfolgende Kühlung der Luft des zumindest einen Bereichs des Innenraums des Brennstoffzellen-Fahrzeugs besonders gut. Bei Kühlbedarf für die Traktionsbatterie kann mit der Schalteinrichtung wieder der Strömungsweg des zweiten Fluides zur Kühlung der Traktionsbatterie entsprechend umgeschaltet werden. Bevorzugt weist die Schalteinrichtung eine Regelung auf, mit der der Anteil des Strömungsvolumens des zweiten Fluides zum wenigstens einen weiteren Wärmetauscher und im Falle dessen Bypass-Anordnung auch der Anteil des Strömungsvolumens des zweiten Fluides zur Wärmetauschverbindung mit der Traktionsbatterie regelbar ist. Damit wird die Flexibilität der Kühlung beim zweiten Kreislauf erhöht. Die Flexibilität der Temperierwirkung des zweiten Fluides beim zweiten Kreislauf ist besonders gut, wenn im zweiten Kreislauf in vorgesehener Strömungsrichtung des zweiten Fluides nach dem oder in Bypass-Anordnung zu dem wenigstens einen weiteren Wärmetauscher eine das zweite Fluid zusätzlich heizbare Heizeinrichtung vor der zum Wärmeaustausch einer Traktionsbatterie mit dem zweiten Fluid ausgebildeten Wärmetauschverbindung angeordnet ist.

Gemäß einer bevorzugten Ausgestaltung der vorliegenden Erfindung ist im zweiten Kreislauf in vorgesehener Strömungsrichtung des zweiten Fluides der für einen Wärmeaustausch zwischen zweitem Fluid und drittem Fluid vorgesehene Wärmetauscher nach der zum Wärmeaustausch einer Traktionsbatterie mit dem zweiten Fluid ausgebildeten Wärmetauschverbindung angeordnet. Folglich ist die Kühlung einer eine höhere Betriebstemperatur als eine Traktionsbatterie aufweisende Brennstoffzellenanordnung nachgeschaltet, so dass die Traktionsbatterie besser gekühlt wird.

Vorzugsweise weist das erfindungsgemäße Kreislaufsystem eine Steuervorrichtung auf, mit der die Volumenströme der Fluide in den Kreisläufen steuerbar sind. Dadurch ist vorteilhaft eine Regulierung des Kreislaufsystems je nach momentaner Situation und Nutzung möglich. Die Steuervorrichtung kann beispielsweise derart ausgebildet sein, dass sie in Abhängigkeit der Temperaturen von Brennstoffzellenanordnung, von Traktionsbatterie, von der Innenluft des Fahrzeuginnenraums und/oder von der Außenluft die Volumenströme in den Kreisläufen steuert.

Nach einer vorteilhaften Ausgestaltung ist das erfindungsgemäße Kreislaufsystem für einen mit Elektroantriebsmotor und Brennstoffzellenanordnung versehenen Omnibus ausgebildet. Für ein derartiges Brennstoffzellen-Fahrzeug ist das Kreislaufsystem besonders gut einsetzbar sowie besonders effektiv.

Schließlich können die Merkmale der Unteransprüche im Wesentlichen frei miteinander und nicht durch die in den Ansprüchen vorliegende Reihenfolge festgelegt kombiniert werden, sofern sie unabhängig voneinander sind.

Die zweite Aufgabe wird durch ein Brennstoffzellen-Fahrzeug mit einem erfindungsgemäßen Kreislaufsystem gelöst. Hinsichtlich der Vorteile sowie der weiteren vorteilhaften Ausführungsformen und Weiterbildungen wird auf die obigen Ausführungen zum erfinderungemäßen Kreislaufsystem entsprechend verwiesen.

Vorzugsweise ist ein derartiges Fahrzeug mit einem derartigen erfindungsgemäßen Kreislaufsystem ein mit Elektroantriebsmotor und einer Brennstoffzellenanordnung versehener Omnibus.

Eine der ersten und zweiten Aufgabe entsprechende Aufgabe hinsichtlich der Bereitstellung eines Verfahrens wird durch ein Verfahren zum Betrieb des erfindungsgemäßen Kreislaufsystems gelöst. Hinsichtlich der Vorteile wird auf die obigen Ausführungen zum erfindungsgemäßen Kreislaufsystem entsprechend verwiesen.

### Kurze Beschreibung der Zeichnungen:

Anhand der Zeichnungen werden Ausführungsbeispiele der Erfindung erläutert.

Es zeigen
Figur 1 in Blockdarstellung eine Ausführungsform des erfindungsgemäßen Kreislaufsystems für ein Brennstoffzellen-Fahrzeug, und
Figur 2 in Blockdarstellung eine weitere Ausführungsform des erfindungsgemäßen Kreislaufsystems für ein Brennstoffzellen-Fahrzeug.

### Ausführliche Beschreibung der Erfindung:

Alle Zeichnungen sind schematisch zu verstehen. Auf maßstabsgetreue Abbildungen wurde zum Zwecke erhöhter Klarheit der Darstellung verzichtet.

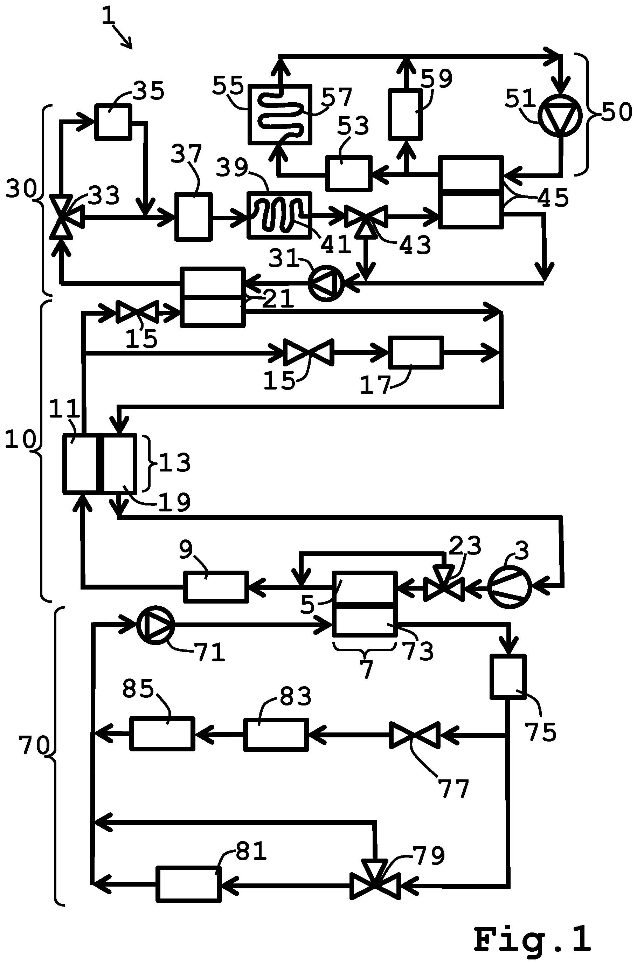

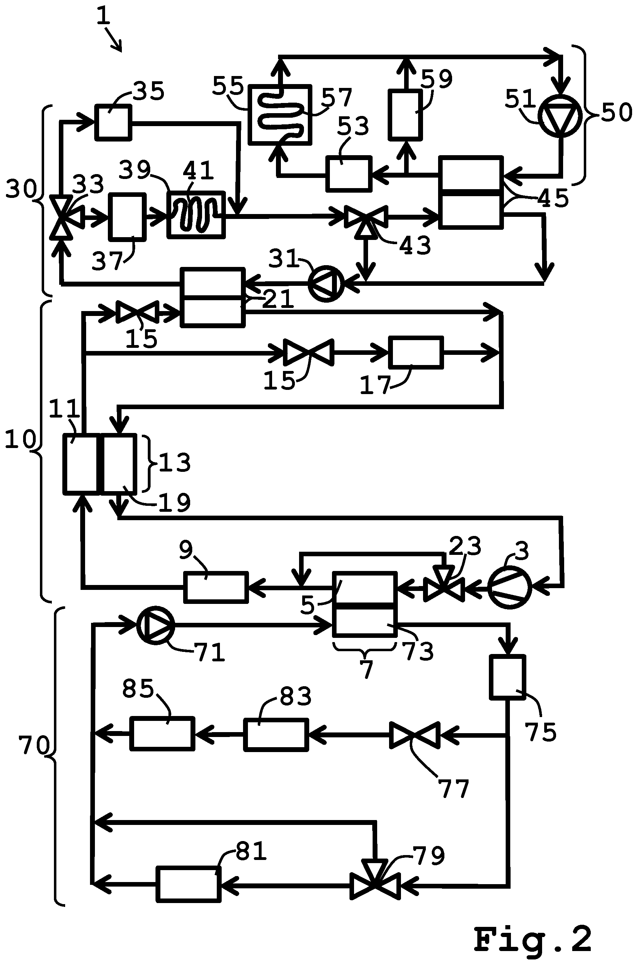

In Figur 1 ist in Blockdarstellung eine Ausführungsform des erfindungsgemäßen Kreislaufsystems 1 für ein Brennstoffzellenfahrzeug gezeigt. Der erste Kreislauf 10, der ein erstes Fluid führt, ist insbesondere für einen Betrieb als Wärmepumpe vorgesehen. In diesem Ausführungsbeispiel ist der erste Kreislauf 10 so druckfest ausgestaltet und dessen Komponenten derart ausgebildet, dass das erste Fluid darin im überkritischen Bereich betrieben werden kann. Das erste Fluid ist CO2 (Kohlendioxid). Es sind auch andere für den überkritischen Betrieb geeignete Kältemittel als erstes Fluid denkbar. Die in Figur 1 und Figur 2 abgebildeten Pfeile geben die Strömungsrichtung des jeweiligen Fluides an. In vorgesehener Strömungsrichtung des ersten Fluides sind im ersten Kreislauf 10 über Kältemittelleitungen verbundene insbesondere die folgenden für den überkritischen Betrieb geeigneten Komponenten eines Wärmepumpenkreislaufs eingebunden:
Ein Verdichter 3, die erste Seite 5 des Wärmetauschers 7, zu der ein mit Ventil 23 schaltbarer Bypass angeordnet ist, ein weiterer als Gaskühler zum Wärmeaustausch mit der Luft nach außen als Fluid-Luft-Wärmetauscher ausgebildeter Wärmetauscher 9, die Hochdruckseite 11 eines als Innenwärmetauscher ausgebildeten Wärmetauschers 13, zwei in Parallelschaltung zueinander als Expansionsventile ausgebildete Expansionsorgane 15, ein als Verdampfer ausgebildeter Wärmetauscher 17, ein parallel dazu über eines der beiden Expansionsorgane 15 zuschaltbarer erster Wärmetauscher 21 und vor Eingang zum Verdichter 3 die Niedrigdruckseite 19 des als Innenwärmetauscher ausgebildeten Wärmetauschers 13.

Der zweite Kreislauf 30 führt ein zweites Fluid wie beispielsweise Wasser oder zum Beispiel ein Wasser-Glykol-Gemisch. Er ist als Kühlkreislauf vorgesehen. Die Fördereinrichtung 31, die in diesem Ausführungsbeispiel als Wasserpumpe ausgebildet ist, pumpt das zweite Fluid durch den ersten Wärmetauscher 21, der als Fluid-Fluid-Wärmetauscher wie beispielsweise als ein Plattenwärmetauscher ausgebildet ist. In dem ersten Wärmetauscher 21 wird Wärme zwischen dem zweiten Fluid und dem ersten Fluid ausgetauscht. Beim Wärmepumpenbetrieb des ersten Kreislaufs 10 nimmt im ersten Wärmetauscher 21 das erste Fluid Wärme vom im zweiten Kreislauf 30 geführten zweiten Fluid auf. In Strömungsrichtung des zweiten Fluides ist nach dem Wärmetauscher 21 die Schalteinrichtung 33 angeordnet. Die Schalteinrichtung 33 umfasst in diesem Ausführungsbeispiel ein Dreiwegeventil. Es sind aber auch andere bekannte geeignete Schalteinrichtungen 33 wie beispielsweise eine zwei Ventile umfassende Schalteinrichtung 33 denkbar. Mit der Schalteinrichtung 33 ist ein weiterer Wärmetauscher 35 zum Kühlen der Luft zumindest eines Bereichs eines Innenraums eines Brennstoffzellen-Fahrzeugs dem zweiten Kreislauf 30 zu- und abschaltbar, also vom zweiten Fluid durchströmt oder nicht. Der weitere Wärmetauscher 35 ist als Fluid-Luft-Wärmetauscher ausgebildet, mit dem durch das gekühlte zweite Fluid der Luft für zumindest einen Bereich des Fahrzeuginnenraums, wie beispielsweise der Bereich des Fahrerplatzes, Wärme entzogen wird. Es sind auch Ausführungsbeispiele denkbar, bei denen mehrere derartiger weitere Wärmetauscher 35 so zu- und abschaltbar im zweiten Kreislauf angeordnet sind und dass nicht nur ein Bereich sondern der gesamte Fahrzeuginnraum damit gekühlt werden kann. Optional verfügt die Schalteinrichtung 33 über eine aus Gründen der Übersichtlichkeit in Figur 1 nicht dargestellte Regelung, mit der der Anteil des Strömungsvolumens des zweiten Fluides zum wenigstens einen weiteren Wärmetauscher 35 regelbar ist. In diesem Ausführungsbeispiel ist dem weiteren Wärmetauscher 35 im zweiten Kreislauf 30 eine das zweite Fluid zusätzlich heizbare Heizeinrichtung 37 nachgeschaltet. Zu dieser Heizeinrichtung 37 würde das zweite Fluid bei von der Schalteinrichtung 33 abgeschaltetem Wärmetauscher 35 direkt strömen. Die Heizeinrichtung 37 ist in diesem Fall eine aus PTC-Elementen aufgebaute elektrische Heizeinrichtung. Es sind auch andere bekannte geeignete Heizeinrichtungen 37 denkbar, wie beispielsweise eine durch Verbrennung von H2 (Wasserstoff), der für den Betrieb der Brennstoffzellenanordnung 55 sowieso im Fahrzeug gespeichert wäre. Je nachdem ob für die Traktionsbatterie 39 des Brennstoffzellen-Fahrzeugs das zweite Fluid vorgeheizt werden müsste oder nicht heizt die Heizeinrichtung 37 oder nicht. Beispielsweise bei Außentemperaturen von unter 0°C würde in der Startphase eines Brennstoffzellen-Fahrzeugs das zweite Fluid mit der Heizeinrichtung 37 vorgeheizt, damit die im zweiten Kreislauf 30 nachgeschaltete Traktionsbatterie 39 die richtige Betriebstemperatur erreicht. Normalerweise ist die Traktionsbatterie 39 während ihres Betriebes jedoch zu kühlen, also von der Traktionsbatterie 39 Wärme durch das zweite Fluid abzuleiten. Es existiert im zweiten Kreislauf 30 eine zum Wärmeaustausch der Traktionsbatterie 39 mit dem zweiten Fluid ausgebildete Wärmetauschverbindung 41. Eine solche Wärmetauschverbindung 41 kann als eine für die Kühlung einer Traktionsbatterie 39 übliche Art, wie beispielsweise um die Traktionsbatterien 39 spulenförmig verlaufende Kühlmittelleitungen, ausgebildet sein. Für die Wärmetauschverbindung 41 kommen sämtliche bekannte dafür geeignete Ausführungsformen zur Kühlung einer Traktionsbatterie 39 mit einem in einem Kühlkreislauf geführten Fluid in Frage.

In Strömungsrichtung des zweiten Fluides nach der zum Wärmeaustausch der Traktionsbatterie 39 mit dem zweiten Fluid ausgebildeten Wärmetauschverbindung 41 ist ein über eine in diesem Ausführungsbeispiel als Dreiwegeventil ausgebildete Schalteinrichtung 43 der Strömungsweg des zweiten Fluides zum Wärmetauscher 45 im zweiten Kreislauf 30 zuschaltbar. Der Wärmetauscher 45 ist als ein Fluid-Fluid-Wärmetauscher, wie beispielsweise als Plattenwärmetauscher, ausgebildet und für einen Wärmeaustausch des zweiten Fluides mit dem dritten Fluid des dritten Kreislaufs 50 vorgesehen. Dort kann vom dritten Fluid Wärme an das zweite Fluid abgegeben werden. Die im zweiten Kreislauf 30 vom zweiten Fluid aufgenommene Wärme kann dann wieder im ersten Wärmetauscher 21 an das kühlere und dort beim Verdampfen Wärme aufnehmende erste Fluid abgegeben werden. Das erste Fluid wurde vor dem Wärmetauscher 21 im Expansionsorgan 15 expandiert. Der Wärmetauscher 21 ist also im Niedrigdruckbereich des ersten Kreislaufs 10 angeordnet.

Im dritten Kreislauf 50 wird das dritte Fluid geführt. Der dritte Kreislauf 50 ist insbesondere zum Kühlen einer Brennstoffzellenanordnung 55 vorgesehen. Das dritte Fluid besteht in diesem Ausführungsbeispiel aus deionisiertem Wasser beziehungsweise destilliertem Wasser. Nach der als Wasserpumpe ausgebildeten Fördereinrichtung 51 ist in Strömungsrichtung des dritten Fluides der Wärmetauscher 45, dem für einen Wärmeaustausch mit dem zweiten Fluid das dritte Fluid zuführbar ist, angeordnet. Das in Reihe vor der Brennstoffzellenanordnung 55 geschaltete Filterelement 53 dient der Filterung von Partikeln aus dem dritten Fluid im Zulaufstrom für die zum Wärmeaustausch einer Brennstoffzellenanordnung 55 mit dem dritten Fluid ausgebildete Wärmetauschverbindung 57. Eine solche Wärmetauschverbindung 57 ist als eine für die Kühlung einer Brennstoffzellenanordnung 55 bekannte und geeignete Art, wie beispielsweise, ohne darauf beschränkt zu sein, durch um die Brennstoffzellenanordnung 55 spulenförmig verlaufende Kühlmittelleitungen, ausgebildet. Die Brennstoffzellenanordnung 55 umfasst beispielsweise, ohne hierauf beschränkt zu sein, Nieder- und Mitteltemperaturbrennstoffzellen auf der Basis einer Polymer-Elektrolytmembran. Parallel zur Brennstoffzellenanordnung 55 ist im dritten Kreislauf 50 ein ebenfalls vom dritten Fluid zu kühlender DCDC-Wandler 59 angeordnet, der den elektrischen Strom der Brennstoffzellenanordnung 55 einstellt. Von der Wärmetauschverbindung 57 mit der Brennstoffzellenanordnung 55 strömt das dritte Fluid im dritten Kreislauf 50 weiter zum Eingang der Fördereinrichtung 51. In dem dritten Kreislauf 50 ist beispielsweise noch die Anordnung eines Ionentauschers denkbar, der in dem dritten Fluid gelöste Ionen aufnimmt, so dass die Obergrenze eines zulässigen Leitwerts des dritten Fluides nicht überschritten wird.

Der vierte Kreislauf 70, der ein viertes Fluid führt, ist über den Wärmetauscher 7, der als Fluid-Fluid-Wärmetauscher wie beispielsweise als Plattenwärmetauscher ausgebildet ist, wärmetechnisch dem Hochdruckbereich des ersten Kreislaufs 10 je nach Schaltung des Ventils 23 an- oder abgekoppelt. Also ist der Wärmetauscher 7 im ersten Kreislauf 10 nach dem Verdichter 3 und vor den beiden Expansionsorganen 15 zuschaltbar angeordnet. Das vierte Fluid ist beispielsweise Wasser oder ein Wasser-Glykol-Gemisch. Auch andere übliche Temperierflüssigkeiten sind als viertes Fluid denkbar. Der Wärmetauscher 7 ist sowohl mit im ersten Kreislauf 10, nämlich mit seiner ersten Seite 5, enthalten als auch im vierten Kreislauf 70, nämlich mit seiner zweiten Seite 73, mit enthalten. Von der als Wasserpumpe ausgebildeten Fördereinrichtung 71 kann das vierte Fluid durch die zweite Seite 73 des Wärmetauschers 7 gepumpt werden, um dort Wärme vom durch die erste Seite 5 strömenden ersten Fluid aufzunehmen. Die Ausführungsvarianten, dass der Wärmetauscher 7 im ersten Kreislauf 10 ohne einen Bypass für die Durchströmung des ersten Fluides angeordnet ist, und/oder dass der Wärmetauscher 7 den einzigen Gaskühler oder Kondensator im ersten Kreislauf 10 darstellt, sind auch denkbar. Das vierte Fluid strömt von der Fördereinrichtung 71 durch die zweite Seite 73 des ersten Wärmetauschers 7 weiter durch für solche Heizkreisläufe übliche Leitungen geführt zu einer optionalen das vierte Fluid zusätzlich heizbaren Heizeinrichtung 75. Von dort strömt das vierte Fluid je nach Schaltung der weiteren Ventile 77, 79 entweder direkt zum Eingang der Fördereinrichtung 71 oder erst noch vorher durch den Konvektor 81 im Fahrzeuginnenraum und/oder durch die das vierte Fluid zusätzlich heizbare weitere Heizeinrichtung 83 und den Wärmetauscher 85 zum Heizen zumindest eines Innenraumbereichs des Fahrzeugs. Dabei ist durch zumindest gemeint, dass beispielsweise auch Ausführungen, die nicht nur einen Bereich sondern den gesamten Innenraum eines Brennstoffzellen-Fahrzeug heizen, denkbar sind. Im Wärmetauscher 85 wird aus dem vierten Fluid Wärme an die Luft des Fahrzeuginnenraums beziehungsweise eines Bereichs des Fahrzeuginnenraums, wie beispielsweise der Bereich des Fahrers des Fahrzeugs, abgegeben. Es sind auch mehrere in den vierten Kreislauf 70 eingebundene Wärmetauscher 85 zum Wärmeaustausch vom vierten Fluid an die Innenluft an verschiedenen Stellen des Fahrzeuginnenraums zum Heizen unterschiedlicher Bereiche des Fahrzeuginnenraums denkbar. Dazu sind bekannte Ausgestaltungen mit Ventilschaltungen denkbar, die neben dem/den Konvektor/(en) 81 ein voneinander unabhängige Heizung der einzelnen Bereiche des Fahrzeuginnenraums mit Wärme aus dem vierten Fluid durch Wärmetauscher 85 ermöglichen. Die zusätzlich das vierte Fluid heizenden Heizeinrichtungen 75, 83 sind beispielsweise geeignete und dafür bekannte mit Strom von 400 V Wechselspannung betreibbare PTC-Heizer oder zum Beispiel mit Wasserstoff als Brennstoff betreibbare Heizeinrichtungen.

Der das erste Fluid führende erste Kreislauf 10 kann also im Wärmepumpenbetrieb von der Brennstoffzellenanordnung 55 auf das dritte Fluid im dritten Kreislauf 50 und weiter auf das zweite Fluid übertragene Wärme sowie von der Traktionsbatterie 39 auf das zweite Fluid im zweiten Kreislauf 30 übertragene Wärme zum das vierte Fluid führenden vierten Kreislauf 70 pumpen.

Mit einer in Figur 1 aus Gründen der Übersichtlichkeit nicht abgebildeten Steuervorrichtung des Kreislaufsystems 1 werden die Volumenströme in den vier Kreisläufen 10, 30, 50 und 70 gesteuert. Dieses Steuern kann insbesondere das Steuern des An- und Abschaltens und der Leistung des Verdichters 3 und der Fördereinrichtungen 31, 51 und 71 umfassen. Auch die zusätzlichen Heizeinrichtungen 37, 75 und 83 werden mit der Steuervorrichtung gesteuert. Eine automatische Steuerung durch die Steuervorrichtung ist denkbar. So kann eine automatische Steuerung beispielsweise in Abhängigkeit von den Temperaturen der Traktionsbatterie 39 und/oder der Brennstoffzellenanordnung 55 und/oder der Außenluft und/oder der Luft im Fahrzeuginnenraum beziehungsweise in Bereichen des Fahrzeuginnraums erfolgen. Prinzipiell ist ferner eine Ausführung des ersten Kreislaufs 10, bei dem das erste Fluid im unterkritischen Bereich betrieben wird, wie bei einem dafür üblichen Kältemittel aus einem FKW, denkbar.

In Figur 2 ist in Blockdarstellung eine weitere Ausführungsform des erfindungsgemäßen Kreislaufsystems 1 für ein Brennstoffzellen-Fahrzeug gezeigt. Bis auf den Teil des zweiten Kreislaufs 30 mit der Schalteinrichtung 33, dem wenigstens eine weitere Wärmetauscher 35, der das zweite Fluid zusätzlich heizbaren Heizeinrichtung 37 und der zum Wärmeaustausch des zweiten Fluides mit einer Traktionsbatterie 39 ausgebildeten Wärmetauschverbindung 41 entspricht diese Ausführungsform der in Figur 1 gezeigten. Somit wird hinsichtlich der Beschreibung und Bezugszeichen des übrigen Teils des Kreislaufsystems 1, wie insbesondere des ersten Kreislaufs 10, des dritten Kreislaufs 50, des vierten Kreislaufs 70 samt ihrer Komponenten und der Steuervorrichtung, auf die obigen Ausführungen zu Figur 1 verwiesen.

Der wenigstens eine Wärmetauscher 35 zum Kühlen der Luft zumindest eines Bereichs eines Innenraums eines Brennstoffzellen-Fahrzeugs ist im zweiten Kreislauf in Bypass-Anordnung zu der das zweite Fluid zusätzlich heizbaren Heizeinrichtung 37 und zu der zum Wärmeaustausch einer Traktionsbatterie 39 mit dem zweiten Fluid ausgebildeten Wärmetauschverbindung 41 angeordnet. Die Schalteinrichtung 33 umfasst in diesem Fall, ohne darauf beschränkt zu sein, ein regelbares Dreiwegeventil. Die Schalteirichtung 33 schaltet den Strömungsweg des zweiten Fluides, nämlich einerseits durch den Bypass mit dem wenigstens einen weiteren Wärmetauscher 35 und anderseits durch die Heizeirichtung 37 und durch die zum Wärmeaustausch einer Traktionsbatterie 39 mit dem zweiten Fluid ausgebildeten Wärmetauschverbindung 41. Die Schalteinrichtung 33 weist eine nicht in Figur 2 aus Gründen der Übersichtlichkeit dargestellte Regelung auf, mit der der Anteil des Strömungsvolumens des zweiten Fluides zum wenigstens einen weiteren Wärmetauscher 35 und auch der Anteil des Strömungsvolumens des zweiten Fluides zur Heizeinrichtung 37 und zur Wärmetauschverbindung 41 mit der Traktionsbatterie 39 regelbar ist. So kann je nach Kühlbedarf für einerseits die Traktionsbatterie 39 und für andererseits die Luft für zumindest einen Bereich des Fahrzeuginnenraums die jeweilige Kühlwirkung durch das zweite Fluid stufenlos zwischen diesen beiden Wegen des zweiten Fluides im zweiten Kreislauf geregelt werden.

Die in Figur 1 und Figur 2 gezeigten Ausführungsbeispiele eines Kreislaufsystems 1 sind beispielsweise für einen mit Elektroantriebsmotor und Brennstoffzellenanordnung 55 versehenen Omnibus ausgebildet. Denkbar sind auch Ausgestaltungen des erfindungsgemäßen Kreislaufsystems 1 für andere Brennstoffzellen-Fahrzeuge, wie insbesondere andere Straßenkraftfahrzeuge.

## Patentansprüche

1. Kreislaufsystem (1) für ein Brennstoffzellen-Fahrzeug zumindest umfassend:
- einen ein erstes Fluid führenden im Wärmepumpenbetrieb betreibbaren ersten Kreislauf (10), bei dem in vorgesehener Strömungsrichtung des ersten Fluides wenigstens ein Verdichter (3), wenigstens ein Wärmetauscher (7, 9) als Kondensator oder Gaskühler, wenigstens ein Expansionsorgan (15) und wenigstens ein weiterer Wärmetauscher (17, 21) als Verdampfer angeordnet sind, wobei nach dem wenigstens einen Expansionsorgan (15) und vor dem wenigstens einen Verdichter (3) zumindest ein erster Wärmetauscher (21), dem das erste Fluid zuführbar ist, angeordnet ist,
- einen ein zweites Fluid führenden zweiten Kreislauf (30) normalerweise zum Kühlen zumindest einer Traktionsbatterie (39), wobei in dem zweiten Kreislauf (30) wenigsten eine Fördereinrichtung (31) für das zweite Fluid, der erste Wärmetauscher (21), dem für einen Wärmeaustausch mit dem ersten Fluid das zweite Fluid zuführbar ist, und eine zum Wärmeaustausch des zweiten Fluides mit einer Traktionsbatterie (39) ausgebildete Wärmetauschverbindung (41) angeordnet sind,
- einen ein drittes Fluid führenden dritten Kreislauf (50) zum Kühlen einer Brennstoffzellenanordnung (55), wobei in dem dritten Kreislauf (50) wenigstens eine Fördereinrichtung (51) für das dritte Fluid, ein Wärmetauscher (45), dem für einen Wärmeaustausch mit dem zweiten Fluid das dritte Fluid zuführbar ist, und eine zum Wärmeaustausch einer Brennstoffzellenanordnung (55) mit dem dritten Fluid ausgebildete Wärmetauschverbindung (57) angeordnet sind,
**dadurch gekennzeichnet**
**dass** das Kreislaufsystem (1) ferner einen ein viertes Fluid führenden vierten Kreislauf (70) umfasst, und im vierten Kreislauf (70) wenigstens eine Fördereinrichtung (71) für das vierte Fluid, wenigstens ein das vierte Fluid zuführbarer Wärmetauscher (85) und/oder Konvektor (81) zum Heizen zumindest eines Innenraumbereichs eines Brennstoffzellen-Fahrzeugs und ein Wärmetauscher (7), dem für einen Wärmeaustausch mit dem ersten Fluid das vierte Fluid zuführbar ist, angeordnet sind, wobei dieser Wärmetauscher (7), dem auch das erste Fluid zuführbar ist, im ersten Kreislauf (10) nach dem wenigstens einen Verdichter (3) und vor dem wenigstens einen Expansionsorgan (15) angeordnet ist.

2. Kreislaufsystem (1) nach Anspruch 1, **dadurch gekennzeichnet dass** der erste Kreislauf (10) derart ausgebildet ist, dass darin ein überkritisch betreibbares Fluid als erstes Fluid überkritisch betreibbar ist.

3. Kreislaufsystem (1) nach Anspruch 2, **dadurch gekennzeichnet dass** das erste Fluid CO2 ist.

4. Kreislaufsystem (1) nach einem der Ansprüche 1 bis 3, **dadurch gekennzeichnet dass** das zweite und vierte Fluid Wasser oder ein Wasser-Glykol-Gemisch sind und das dritte Fluid deionisiertes Wasser ist.

5. Kreislaufsystem (1) nach einem der Ansprüche 1 bis 4, **dadurch gekennzeichnet dass** im ersten Kreislauf (10) in vorgesehener Strömungsrichtung des ersten Fluides nach dem wenigstens einen Expansionsorgan (15) und vor dem wenigstens einen Verdichter (3) ein als Fluid-Luft-Wärmetauscher ausgebildeter und als Verdampfer betreibbarer weiterer Wärmetauscher (17) angeordnet ist.

6. Kreislaufsystem (1) nach einem der Ansprüche 1 bis 5, **dadurch gekennzeichnet dass** dem zweiten Kreislauf (30) und/oder dem vierten Kreislauf (70) zumindest eine das zweite Fluid und/oder vierte Fluid zusätzlich heizbare Heizeinrichtung (37, 75, 83) zugeschaltet oder zuschaltbar ist.

7. Kreislaufsystem (1) nach einem der Ansprüche 1 bis 6, **dadurch gekennzeichnet dass** im zweiten Kreislauf (30) in vorgesehener Strömungsrichtung des zweiten Fluides nach dem ersten Wärmetauscher (21) und vor der oder in Bypass-Anordnung zu der zum Wärmeaustausch einer Traktionsbatterie (39) mit dem zweiten Fluid ausgebildeten Wärmetauschverbindung (41) wenigstens ein weiterer Wärmetauscher (35) zum Kühlen der Luft zumindest eines Bereichs eines Innenraums eines Brennstoffzellen-Fahrzeugs angeordnet ist, und dieser wenigstens eine weitere Wärmetauscher (35) mit einer Schalteinrichtung (33) zu dem zweiten Kreislauf (30) zu- und abschaltbar ist.

8. Kreislaufsystem (1) nach Anspruch 7, **dadurch gekennzeichnet dass** die Schalteinrichtung (33) eine Regelung aufweist, mit der der Anteil des Strömungsvolumens des zweiten Fluides zum wenigstens einen weiteren Wärmetauscher (35) und im Falle dessen Bypass-Anordnung auch der Anteil des Strömungsvolumens des zweiten Fluides zur Wärmetauschverbindung (41) mit einer Traktionsbatterie (39) regelbar ist.

9. Kreislaufsystem (1) nach Anspruch 7 oder 8, **dadurch gekennzeichnet dass** im zweiten Kreislauf (30) in vorgesehener Strömungsrichtung des zweiten Fluides nach dem oder in Bypass-Anordnung zu dem wenigstens einen weiteren Wärmetauscher (35) eine das zweite Fluid zusätzlich heizbare Heizeinrichtung (37) vor der zum Wärmeaustausch einer Traktionsbatterie (39) mit dem zweiten Fluid ausgebildeten Wärmetauschverbindung (41) angeordnet ist.

10. Kreislaufsystem (1) nach einem der Ansprüche 1 bis 9, **dadurch gekennzeichnet dass** im zweiten Kreislauf (30) in vorgesehener Strömungsrichtung des zweiten Fluides der für einen Wärmetausch zwischen zweitem Fluid und drittem Fluid vorgesehene Wärmetauscher (45) nach der zum Wärmeaustausch einer Traktionsbatterie (39) mit dem zweiten Fluid ausgebildeten Wärmetauschverbindung (41) angeordnet ist.

11. Kreislaufsystem (1) nach einem der Ansprüche 1 bis 10, **dadurch gekennzeichnet dass** es eine Steuervorrichtung aufweist, mit der die Volumenströme der Fluide in den Kreisläufen (10, 30, 50, 70) steuerbar sind.

12. Kreislaufsystem (1) nach einem der Ansprüche 1 bis 11, **dadurch gekennzeichnet dass** es für einen mit Elektroantriebsmotor und Brennstoffzellenanordnung (55) versehenen Omnibus ausgebildet ist.

13. Brennstoffzellen-Fahrzeug, wie insbesondere ein mit Elektroantriebsmotor und Brennstoffzellenanordnung (55) versehener Omnibus, mit einem Kreislaufsystem (1) nach einem der Ansprüche 1 bis 12.

14. Verfahren zum Betrieb eines Kreislaufsystems (1) nach einem der Ansprüche 1 bis 12.

15. Verfahren nach Anspruch 14 umfassend die Schritte
- ein erstes Fluid durch den ersten im Wärmepumpenbetrieb betriebenen ersten Kreislauf (10) umfassend wenigstens einen Verdichter (3), einen Wärmetauscher (7, 9) als Kondensator oder Gaskühler, ein Expansionsorgan (15) und einen weiteren Wärmetauscher (21) als Verdampfer strömen lassen,
- ein zweites Fluid normalerweise zum Kühlen der Traktionsbatterie (39) durch den zweiten Kreislauf (30) umfassend wenigstens eine Fördereinrichtung (31) für das zweite Fluid, den ersten Wärmetauscher (21) zum Wärmeaustausch mit dem ersten Fluid, und eine zum Wärmeaustausch, des zweiten Fluides mit der Traktionsbatterie (39) ausgebildete Wärmetauschverbindung (41) strömen lassen,
- ein drittes Fluid zum Kühlen einer Brennstoffzellenanordnung (55) durch den dritten Kreislauf (50) umfassend wenigstens eine Fördereinrichtung (55) für das dritte Fluid, einen Wärmetauscher (45) zum Wärmeaustausch mit dem zweiten Fluid und eine Wärmetauschverbindung (57) zum Wärmeaustausch der Brennstoffzellenanordnung (55) mit dem dritten Fluid strömen lassen,
- ein viertes Fluid zum Heizen zumindest eines Innenraumbereichs des Brennstoffzellen-Fahrzeugs durch den vierten Kreislauf (70) umfassend wenigstens eine Fördereinrichtung (71) für das vierte Fluid, einen Wärmetauscher (85) und/oder Konvektor (81) und ein Wärmetauscher (7) zum Wärmeaustausch mit dem ersten Fluid strömen lassen, wobei dieser Wärmetauscher (7) auch im ersten Kreislauf (10) nach dem wenigstens einen Verdichter (3) und vor dem wenigstens einen Expansionsorgan (15) angeordnet ist,
und **dadurch gekennzeichnet, dass**
- mit einer Steuervorrichtung des Kreislaufsystems (1) zumindest die Volumenströme in den vier Kreisläufen (10, 30, 50, 70) automatisch in Abhängigkeit von den Temperaturen der Traktionsbatterie (39) und/oder der Brennstoffzellenanordnung (55) und/oder der Außenluft und/oder der Luft im Fahrzeuginnenraum gesteuert werden.

## Claims

1. Circuit system (1) for a fuel cell vehicle at least comprising:
- a first circuit (10) which carries a first fluid and which can be operated in heat pump mode and in which there is arranged, in the intended flow direction of the first fluid, at least one compressor (3), at least one heat exchanger (7, 9) as condenser or gas cooler, at least one expansion member (15) and at least one further heat exchanger (17, 21) as evaporator, wherein at least one first heat exchanger (21), to which the first fluid can be supplied, is arranged downstream of the at least one expansion member (15) and upstream of the at least one compressor (3),
- a second circuit (30), which carries a second fluid, normally for cooling at least one traction battery (39), wherein the second circuit (30) has arranged therein at least one delivery device (31) for the second fluid, the first heat exchanger (21), to which the second fluid can be supplied for heat exchange with the first fluid, and a heat exchange connection (41) designed for heat exchange of the second fluid with a traction battery (39),
- a third circuit (50), which carries a third fluid, for cooling a fuel cell arrangement (55), wherein the third circuit (50) has arranged therein at least one delivery device (51) for the third fluid, a heat exchanger (45), to which the third fluid can be supplied for heat exchange with the second fluid, and a heat exchange connection (57) designed for heat exchange of a fuel cell arrangement (55) with the third fluid,
**characterized**
**in that** the circuit system (1) further comprises a fourth circuit (70) which carries a fourth fluid, and the fourth circuit (70) has arranged therein at least one delivery device (71) for the fourth fluid, at least one heat exchanger (85), to which the fourth fluid can be supplied, and/or convector (81) for heating at least one interior region of a fuel cell vehicle and a heat exchanger (7), to which the fourth fluid can be supplied for heat exchange with the first fluid, wherein this heat exchanger (7), to which the first fluid can also be supplied, is arranged in the first circuit (10) downstream of the at least one compressor (3) and upstream of the at least one expansion member (15) .

2. Circuit system (1) according to Claim 1, **characterized in that** the first circuit (10) is designed in such a way that fluid which can be operated supercritically can be operated supercritically therein as first fluid.

3. Circuit system (1) according to Claim 2, **characterized in that** the first fluid is CO₂.

4. Circuit system (1) according to one of Claims 1 to 3, **characterized in that** the second and fourth fluid are water or a water-glycol mixture, and the third fluid is deionized water.

5. Circuit system (1) according to one of Claims 1 to 4, **characterized in that** the first circuit (10) has arranged therein, in the intended flow direction of the first fluid, downstream of the at least one expansion member (15) and upstream of the at least one compressor (3), a further heat exchanger (17) which is designed as a fluid-air heat exchanger and which can be operated as an evaporator.

6. Circuit system (1) according to one of Claims 1 to 5, **characterized in that** at least one heating device (37, 75, 83) which can additionally heat the second fluid and/or fourth fluid is or can be connected to the second circuit (30) and/or the fourth circuit (70).

7. Circuit system (1) according to one of Claims 1 to 6, **characterized in that** the second circuit (30) has arranged therein, in the intended flow direction of the second fluid, downstream of the first heat exchanger (21) and upstream of, or in bypass arrangement to, the heat exchange connection (41) designed for heat exchange of a traction battery (39) with the second fluid, at least one further heat exchanger (35) for cooling the air at least of one region of an interior of a fuel cell vehicle, and this at least one further heat exchanger (35) can be connected to and disconnected from the second circuit (30) by a switching device (33).

8. Circuit system (1) according to Claim 7, **characterized in that** the switching device (33) has a regulator which can be used to regulate the proportion of the flow volume of the second fluid to the at least one further heat exchanger (35) and, in the case of its bypass arrangement, also the proportion of the flow volume of the second fluid to the heat exchange connection (41) with a traction battery (39).

9. Circuit system (1) according to Claim 7 or 8, **characterized in that** the second circuit (30) has arranged therein, in the intended flow direction of the second fluid, downstream of, or in bypass arrangement to, the at least one further heat exchanger (35), a heating device (37), which can additionally heat the second fluid, upstream of the heat exchange connection (41) designed for heat exchange of a traction battery (39) with the second fluid.

10. Circuit system (1) according to one of Claims 1 to 9, **characterized in that** the second circuit ,(30) has arranged therein, in the intended flow direction of the second fluid, the heat exchanger (45) provided for heat exchange between the second fluid and third fluid, downstream of the heat exchange connection (41) designed for heat exchange of a traction battery (39) with the second fluid.

11. Circuit system (1) according to one of Claims 1 to 10, **characterized in that** it has a control device by means of which the volumetric flows of the fluids in the circuits (10, 30, 50, 70) can be controlled.

12. Circuit system (1) according to one of Claims 1 to 11, **characterized in that** it is designed for a bus provided with an electric drive motor and fuel cell arrangement (55).

13. Fuel cell vehicle, such as in particular a bus provided with an electric drive motor and fuel cell arrangement (55), having a circuit system (1) according to one of Claims 1 to 12.

14. Method for operating a circuit system (1) according to one of Claims 1 to 12.

15. Method according to Claim 14 comprising the steps
- of allowing a first fluid to flow through the first circuit (10), which is operated in heat pump mode, comprising at least one compressor (3), a heat exchanger (7, 9) as condenser or gas cooler, an expansion member (15) and a further heat exchanger (21) as evaporator,
- of allowing a second fluid normally for cooling the traction battery (39) to flow through the second circuit (30) comprising at least one delivery device (31) for the second fluid, the first heat exchanger (21) for heat exchange with the first fluid, and a heat exchange connection (41) designed for heat exchange of the second fluid with the traction battery (39),
- of allowing a third fluid for cooling a fuel cell arrangement (55) to flow through the third circuit (50) comprising at least one delivery device (55) for the third fluid, a heat exchanger (45) for heat exchange with the second fluid, and a heat exchange connection (57) for heat exchange of the fuel cell arrangement (55) with the third fluid,
- of allowing a fourth fluid for heating at least one interior region of the fuel cell vehicle to flow through the fourth circuit (70) comprising at least one delivery device (71) for the fourth fluid, a heat exchanger (85) and/or convector (81) and a heat exchanger (7) for heat exchange with the first fluid, wherein this heat exchanger (7) is also arranged in the first circuit (10) downstream of the at least one compressor (3) and upstream of the at least one expansion member (15),
and **characterized in that**
- a control device of the circuit system (1) can be used to control at least the volumetric flows in the four circuits (10, 30, 50, 70) automatically in dependence on the temperatures of the traction battery (39) and/or of the fuel cell arrangement (55) and/or of the outside air and/or of the air in the vehicle interior.

## Revendications

1. Système de circuits de circulation (1) destiné à un véhicule à pile à combustible, ledit système de circuits de circulation comprenant au moins :
- un premier circuit de circulation (10) qui guide un premier fluide, qui peut fonctionner en pompe à chaleur et dans lequel au moins un compresseur (3), au moins un échangeur de chaleur (7, 9) utilisé comme condenseur ou comme refroidisseur de gaz, au moins un élément de détente (15) et au moins un autre échangeur de chaleur (17, 21) utilisé comme évaporateur sont disposés dans le sens d'écoulement prévu du premier fluide, au moins un premier échangeur de chaleur (21), auquel le premier fluide peut être amené, étant disposé en aval de l'au moins un élément de détente (15) et en amont de l'au moins un compresseur (3),
- un deuxième circuit de circulation (30) qui guide un deuxième fluide et qui est destiné normalement à refroidir au moins une batterie de traction (39), au moins un moyen de transport (31) destiné au deuxième fluide, le premier échangeur de chaleur (21) auquel le deuxième fluide peut être amené pour l'échange de chaleur avec le premier fluide, et une liaison d'échange de chaleur (41) conçue pour l'échange de chaleur du deuxième fluide avec une batterie de traction (39) étant disposés dans le deuxième circuit de circulation (30),
- un troisième circuit de circulation (50) qui guide un troisième fluide et qui est destiné à refroidir un ensemble de piles à combustible (55),
au moins un moyen de transport (51) destiné au troisième fluide, un échangeur de chaleur (45) auquel le troisième fluide peut être amené pour l'échange de chaleur avec le deuxième fluide, et une liaison d'échange de chaleur (57) conçue pour l'échange de chaleur d'un ensemble de piles à combustible (55) avec le troisième fluide étant disposés dans le troisième circuit de circulation (50),
**caractérisé en ce que**
le système de circuits de circulation (1) comprend en outre un quatrième circuit de circulation (70) qui guide un quatrième fluide et au moins un moyen de transport (71) destiné au quatrième fluide, au moins un échangeur de chaleur (85) et/ou convecteur (81) destiné à chauffer au moins une zone de l'espace intérieur d'un véhicule à pile à combustible et un échangeur de chaleur (7) auquel le quatrième fluide peut être amené pour l'échange de chaleur avec le premier fluide sont disposés dans le quatrième circuit de circulation (70), cet échangeur de chaleur (7) auquel le premier fluide peut également être amené étant disposé dans le premier circuit de circulation (10) en aval de l'au moins un compresseur (3) et en amont de l'au moins un élément de détente (15).

2. Système de circuits de circulation (1) selon la revendication 1, **caractérisé en ce que** le premier circuit de circulation (10) est conçu de telle sorte qu'un fluide à fonctionnement supercritique peut être utilisé à l'intérieur comme premier fluide supercritique.

3. Système de circuits de circulation (1) selon la revendication 2, **caractérisé en ce que** le premier fluide est du CO2.

4. Système de circuits de circulation (1) selon l'une des revendications 1 à 3, **caractérisé en ce que** les deuxième et quatrième fluides sont de l'eau ou un mélange eau-glycol et le troisième fluide est de l'eau déionisée.

5. Système de circuits de circulation (1) selon l'une des revendications 1 à 4, **caractérisé en ce qu'**un autre échangeur de chaleur (17) pouvant être utilisé comme échangeur de chaleur fluide-air et comme évaporateur est disposé dans le premier circuit de circulation (10) en aval de l'au moins un élément de détente (15) et en amont de l'au moins un compresseur (3) dans le sens d'écoulement prévu du premier fluide.

6. Système de circuits de circulation (1) selon l'une des revendications 1 à 5, **caractérisé en ce qu'**au moins un moyen de chauffage (37, 75, 83) pouvant chauffer en plus le deuxième fluide et/ou le quatrième fluide est ou peut être connecté au deuxième circuit de circulation (30) et/ou au quatrième circuit de circulation (70).

7. Système de circuits de circulation (1) selon l'une des revendications 1 à 6, **caractérisé en ce qu'**au moins un autre échangeur de chaleur (35) destiné à refroidir l'air d'au moins une zone d'un espace intérieur d'un véhicule à pile à combustible est disposé dans le deuxième circuit de circulation (30) en aval du premier échangeur de chaleur (21) et en amont ou en dérivation de la liaison d'échange de chaleur (41) conçue pour l'échange de chaleur d'une batterie de traction (39) avec le deuxième fluide, dans le sens d'écoulement prévu du deuxième fluide et cet au moins un autre échangeur de chaleur (35) peut être connecté au deuxième circuit de circulation (30), et déconnecté de celui-ci, au moyen d'un moyen de commutation (33).

8. Système de circuits de circulation (1) selon la revendication 7, **caractérisé en ce que** le moyen de commutation (33) comporte une unité de régulation permettant de réguler la proportion en volume de l'écoulement du deuxième fluide vers au moins un autre échangeur de chaleur (35) et, dans le cas où celui-ci est agencé en dérivation, également la proportion en volume de l'écoulement du deuxième fluide vers la liaison d'échange de chaleur (41) avec une batterie de traction (39).

9. Système de circuits de circulation (1) selon la revendication 7 ou 8, **caractérisé en ce que**, dans le deuxième circuit de circulation (30) en aval ou en dérivation de l'au moins un autre échangeur de chaleur (35) dans le sens d'écoulement prévu du deuxième fluide, un moyen de chauffage (37) pouvant chauffer en plus le deuxième fluide est disposé en amont de la liaison d'échange de chaleur (41) conçue pour l'échange de chaleur d'une batterie de traction (39) avec le deuxième fluide.

10. Système de circuits de circulation (1) selon l'une des revendications 1 à 9, **caractérisé en ce que**, dans le deuxième circuit de circulation (30) dans le sens d'écoulement prévu du deuxième fluide, l'échangeur de chaleur (45) prévu pour l'échange de chaleur entre le deuxième fluide et le troisième fluide est disposé en aval de la liaison d'échange de chaleur (41) conçue pour l'échange de chaleur d'une batterie de traction (39) avec le deuxième fluide.

11. Système de circuits de circulation (1) selon l'une des revendications 1 à 10, **caractérisé en ce qu'**il comporte un dispositif de commande permettant de commander les débits volumiques des fluides dans les circuits de circulation (10, 30, 50, 70).

12. Système de circuits de circulation (1) selon l'une des revendications 1 à 11, **caractérisé en ce qu'**il est conçu pour un omnibus muni d'un moteur d'entraînement électrique et d'un ensemble de piles à combustible (55) .

13. Véhicule à pile à combustible, tel que notamment un omnibus muni d'un moteur d'entraînement électrique et d'un ensemble de piles à combustible (55), ledit véhicule comprenant un système de circuits de circulation (1) selon l'une des revendications 1 à 12.

14. Procédé de fonctionnement d'un système de circuits de circulation (1) selon l'une des revendications 1 à 12.

15. Procédé selon la revendication 14, comprenant les étapes suivantes :
- un premier fluide est mis en circulation dans le premier circuit de circulation (10), fonctionnant en pompe à chaleur, comprenant au moins un compresseur (3), un échangeur de chaleur (7, 9) utilisé comme condenseur ou refroidisseur de gaz, un élément de détente (15) et un autre échangeur de chaleur (21) utilisé comme évaporateur,
- un deuxième fluide destiné normalement à refroidir la batterie de traction (39) est mis en circulation à travers le deuxième circuit de circulation (30) comprenant au moins un moyen de transport (31) destiné au deuxième fluide, le premier échangeur de chaleur (21) destiné à l'échange de chaleur avec le premier fluide, et une liaison d'échange de chaleur (41) conçue pour l'échange de chaleur du deuxième fluide avec la batterie de traction (39),
- un troisième fluide destiné à refroidir un ensemble de piles à combustible (55) est mis en circulation à travers le troisième circuit de circulation (50) comprenant au moins un moyen de transport (55) destiné au troisième fluide, un échangeur de chaleur (45) destiné à l'échange de chaleur avec le deuxième fluide et une liaison d'échange de chaleur (57) destinée à l'échange de chaleur de l'ensemble de piles à combustible (55) avec le troisième fluide,
- un quatrième fluide destiné à chauffer au moins une zone de l'espace intérieur du véhicule à pile à combustible est mis en circulation à travers le quatrième circuit de circulation (70) comprenant au moins un moyen de transport (71) destiné au quatrième fluide, un échangeur de chaleur (85) et/ou convecteur (81) et un échangeur de chaleur (7) destiné à l'échange de chaleur avec le premier fluide, cet échangeur de chaleur (7) étant également disposé dans le premier circuit de circulation (10) en aval de l'au moins un compresseur (3) et en amont de l'au moins un élément de détente (15),
et **caractérisé en ce que**
- au moins le débit volumique dans les quatre circuits de circulation (10, 30, 50, 70) peut être commandé automatiquement avec un dispositif de commande du système de circuits de circulation (1) en fonction de la température de la batterie de traction (39) et/ou de l'ensemble de piles à combustible (55) et/ou de l'air extérieur et/ou de l'air dans l'espace intérieur du véhicule.
